## Europäisches Patentamt

## European Patent Office

## Office européen des brevets

(19)

(11) Veröffentlichungsnummer: **0 171 546**
**B1**

(12)

# EUROPÄISCHE PATENTSCHRIFT

(45) Veröffentlichungstag der Patentschrift:
28.12.88

(51) Int. Cl.⁴: **G 01 D 5/32,** H 03 M 1/22,
F 16 B 2/08

(21) Anmeldenummer: 85107619.0

(22) Anmeldetag: 20.06.85

(54) **Justiervorrichtung für Winkelschrittgeber.**

(30) Priorität: 27.07.84 DE 3427709

(43) Veröffentlichungstag der Anmeldung:
19.02.86 Patentblatt 86/8

(45) Bekanntmachung des Hinweises auf die Patenterteilung:
28.12.88 Patentblatt 88/52

(84) Benannte Vertragsstaaten:
AT BE CH DE FR GB IT LI NL SE

(56) Entgegenhaltungen:
EP-A- 0 105 829
DE-C- 2 448 239
US-A- 4 147 444

Industrial Fasteners Handbook, 1. Ausgabe, Trade &
Tehcnical Press Ltd., 1976; S. 105, 106

(73) Patentinhaber: Max Stegmann Gmbh Uhren- und
Elektroapparatefabrik, Dürrheimer Strasse 36,
D-7710 Donauschingen (DE)
Patentinhaber: KUKA Schweissanlagen & Roboter
GmbH, Blücherstrasse 144, D-8900 Augsburg (DE)

(72) Erfinder: Siraky, Josef, Dipl.-Ing., Brigachtalstrasse 31,
D-7710 Donaueschingen 13 (DE)
Erfinder: Häffner, Bernd, Sommerhalde 29, D-7737 Bad
Dürrheim 3 (DE)
Erfinder: BINDER Karl Ludwig, Gunzenleestr. 20a,
8901 Kissing (DE)

(74) Vertreter: Patentanwälte Dipl.-Ing. Klaus Westphal Dr.
rer. nat. Bernd Mussgnug Dr. rer.nat. Otto Buchner,
Waldstrasse 33, D-7730 VS-Villingen (DE)

## Beschreibung

Die Erfindung betrifft eine Justiervorrichtung für Winkelschrittgeber mit einer Eingangswelle, mit wenigstens einem mit der Eingangswelle in Drehverbindung stehenden Winkelmesselement und mit einem elastischen winkelsteifen Verbindungselement, das zwischen der Eingangswelle und einer in ihrer Winkelstellung zu messenden Antriebswelle eingesetzt ist.

Winkelschrittgeber dienen als Analog-Digital-Wandler insbesondere zum elektrischen Messen von Winkeln. Sie werden häufig dafür eingesetzt, die Winkelstellungen von Wellen zum Beispiel an Werkzeugmaschinen oder Handhabungsautomaten zu erfassen.

Bei inkrementalen Winkelschrittgebern erzeugt das Winkelmesselement, zum Beispiel eine Strichscheibe, bei der Drehung der Eingangswelle in gleichmässigen Winkelabständen elektrische Impulse. Die Zählung dieser Impulse ergibt ein Mass für die momentane Winkelstellung des Winkelschrittgebers. Im allgemeinen ist eine Nullpunkts-Markierung auf dem Winkelmesselement vorgesehen, die einmal pro Umdrehung erscheint. Diese Nullpunkts-Markierung setzt den angeschlossenen Zähler auf Null zurück und legt damit den Nullpunkt der Winkelstellung der zu messenden Antriebswelle fest. Bei inkrementalen Winkelschrittgebern muss der Nullpunkt der Winkelstellung der Antriebswelle bei jeder Inbetriebnahme neu festgelegt werden, denn der Winkelschrittgeber kann bei abgeschaltetem System gedreht worden sein. Ausserdem können Störimpulse das Zählergebnis und damit die Winkelmessung störend beeinflussen.

Bei absoluten Winkelschrittgebern weist das Winkelmesselement, zum Beispiel eine Scheibe oder Trommel, die Winkelstellungen in codierter Form auf. Die codierten Winkelwerte werden mechanisch, magnetisch oder optisch abgetastet. Die Codierung gibt die Winkelstellung der Eingangswelle absolut an, so dass Störungen durch einen Ausfall der Elektronik, durch Verdrehen des Winkelschrittgebers bei abgeschalteter Elektronik oder durch Störimpulse nicht möglich sind. Bei dem absoluten Winkelschrittgeber muss nur einmal der Nullpunkt des Winkelmesselements mit dem Nullpunkt der Winkelstellung der zu messenden Antriebswelle in Übereinstimmung gebracht werden.

Bei bekannten Winkelschrittgebern ist das Winkelmesselement, zum Beispiel die Codescheibe eines absoluten Winkelschrittgebers, entweder fest oder mit Hilfe einer Rutschkupplung (DE-PS 2 448 239) an der Eingangswelle befestigt. Zur Justage des Nullpunkts muss im ersten Falle die Verbindung zwischen der Eingangswelle des Winkelschrittgebers und der zu messenden Antriebswelle gelöst werden oder im zweiten Falle wird die Codescheibe gegenüber der Eingangswelle verdreht, indem das Losbrechmoment der eingebauten Rutschkupplung mit Hilfe eines speziellen Werkzeuges überwunden wird. Im ersten Fall ist ein schwieriger und zeitraubender Vorgang erforderlich, der bei hochauflösenden Winkelschrittgebern praktisch kaum durchführbar ist. Im zweiten Falle wird durch die eingebaute Friktionskupplung der Justiervorgang zwar erleichtert, die Friktionskupplung kann jedoch bei hohen Winkelbeschleunigungen rutschen, so dass die Justierung verloren geht, wenn das Losbrechmoment bzw. Reibungsmoment der Friktionskupplung gering ist. Bei einem hohen Reibungsmoment der Rutschkupplung treten dagegen Schwierigkeiten auf, weil das Verbindungselement zwischen der Eingangswelle und der Antriebswelle zumindest dieses Losbrechmoment ohne Beschädigung übertragen können muss.

Der Erfindung liegt die Aufgabe zugrunde, eine Justiervorrichtung für Winkelschrittgeber zu schaffen, die eine einfache und schnelle Nullpunkt-Justage des montierten Winkelschrittgebers ermöglicht, ohne dass während des Justiervorgangs ein Drehmoment auf das Verbindungselement zwischen der Eingangswelle und der zu messenden Antriebswelle entsteht.

Diese Aufgabe wird erfindungsgemäss durch die Merkmale von Anspruch 1 gelöst.

Vorteilhafte Ausführungsformen der Erfindung sind in den abhängigen Ansprüchen angegeben.

Die kraftschlüssige Verbindung zwischen der Eingangswelle des Winkelschrittgebers und der zu messenden Antriebswelle durch ein im Durchmesser verstellbares Wellenende hat den Vorteil, dass zur Erzeugung des Kraftschlusses eine ausschliesslich radiale Bewegung vorgesehen ist. Die Eingangswelle des Gebers mit dem mit dieser Eingangswelle verbundenen Winkelmesssystem kann zur Nullpunkts-Justage bei gelöstem Kraftschluss exakt mit dem Nullpunkt der Antriebswelle in Übereinstimmung gebracht werden. Dann wird der Durchmesser des verstellbaren Wellenendes zur Erzeugung der kraftschlüssigen Verbindung zwischen Antriebswelle und Eingangswelle verstellt. Da hierbei Bewegungen radial zu diesen Wellen auftreten, kann bei der Erzeugung des Kraftschlusses kein die exakte Nullpunkts-Justage beeinträchtigendes Drehmoment auftreten. Die praktisch widerstandslos freie Verdrehbarkeit der Eingangswelle bei gelöstem Kraftschluss und die Erzeugung der kraftschlüssigen Verbindung ohne Auftreten eines Drehmoments machen die Justiervorrichtung insbesondere für empfindliche hochauflösende Winkelschrittgeber geeignet.

Die Erzeugung einer kraftschlüssigen Verbindung durch Veränderung des Durchmessers eines Wellenendes wird zweckmässigerweise in der Form ausgeführt, dass dieses Wellenende als hohles Wellenende ausgebildet ist, das in eine Sackbohrung einsetzbar und zur Erzeugung des Kraftschlusses in der Sackbohrung auseinanderspreizbar ist. Das Auseinanderspreizen kann zweckmässigerweise dadurch bewirkt werden, dass das hohle Wellenende einen Innenkonus und axiale Schlitze aufweist, so dass es durch einen koaxialen Spreizstift auseinandergedrückt werden kann.

Diese Ausführung macht auch eine besonders einfache Justage bei montiertem Winkelschrittgeber möglich. Die das auseinanderspreizbare hohle Wellenende aufweisende Welle ist dazu als durchgehende Hohlwelle ausgebildet, und der Spreizstift ist koaxial durch diese Hohlwelle geführt. Der Spreizstift ist koaxial durch diese Hohlwelle geführt. Der Spreizstift kann mittels eines Gewindes in der Hohlwelle axial verschoben werden. Der Spreizstift kann von dem der Antriebswelle entgegengesetzten, frei zugänglichen Ende mittels einer Schraube zum Lösen oder kraftschlüssigen Spannen des auseinanderspreizbaren hohlen Wellenendes axial verschoben werden.

In einer konstruktiv besonders einfachen Ausführung ist das hohle Wellenende das der Antriebswelle zugewandte Ende der Eingangswelle des Winkelschrittgebers. Die Eingangswelle ist in diesem Falle als Hohlwelle ausgebildet, so dass der Spreizstift koaxial durch die Eingangswelle geführt ist. Das elastische, winkelsteife Verbindungselement ist in diesem Falle zwischen die Eingangswelle und die Antriebswelle eingesetzt und an der Antriebswelle befestigt. Das spreizbare hohle Wellenende der Eingangswelle wird in eine Bohrung des Verbindungselementes eingesetzt.

In einer anderen Ausführungsform ist die Eingangswelle des Winkelschrittgebers als Rohr ausgebildet, durch welches frei eine koaxiale Kupplungswelle hindurchgeführt ist. Die Kupplungswelle weist das auseinanderspreizbare Wellenende auf, das in eine Sackbohrung der Antriebswelle eingesetzt wird. Der Spreizstift wird koaxial durch die Kupplungswelle geführt. Das elastische Verbindungselement, das Toleranzen in der axialen Fluchtung zwischen der Antriebswelle und der Eingangswelle bei der Montage des Winkelschrittgebers aufnimmt, kann in dieser Ausführungsform an dem der Antriebswelle entgegengesetzten Ende angeordnet werden und verbindet die reibschlüssig starr mit der Antriebswelle verbundene Kupplungswelle mit der Eingangswelle. Da das Verbindungselement nicht axial zwischen der Eingangs- und der Antriebswelle angeordnet ist, ergibt sich eine Verringerung der axialen Baulänge des montierten Winkelschrittgebers.

Im folgenden wird die Erfindung anhand von in der Zeichnung dargestellten Ausführungsbeispielen näher erläutert. Es zeigen

Figur 1 eine erste Ausführungsform eines Winkelschrittgebers im Axialschnitt und
Figur 2 eine zweite Ausführungsform des Winkelschrittgebers im Axialschnitt.

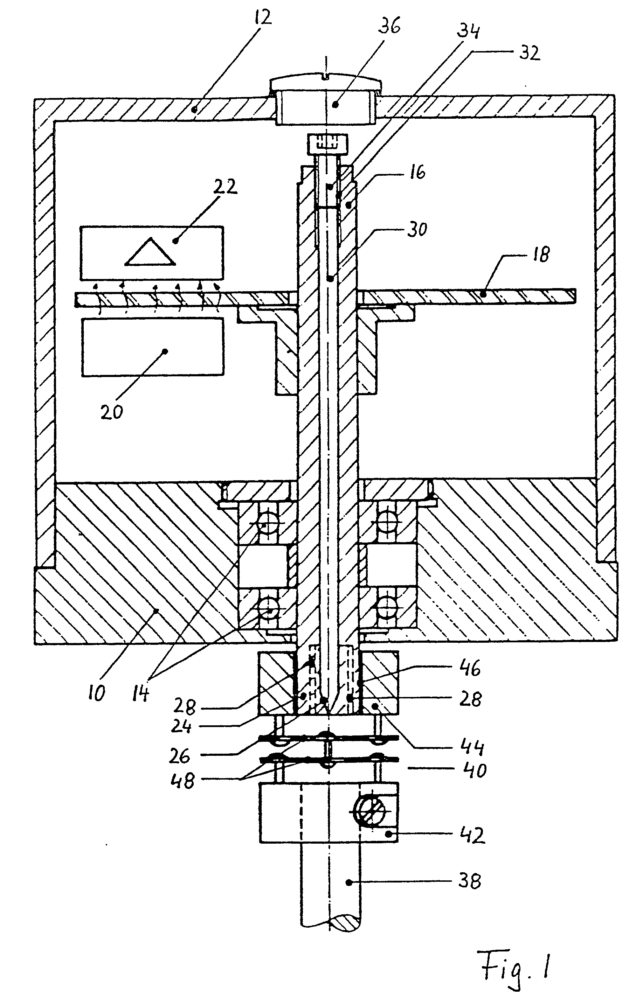

Der in Figur 1 gezeigte absolute Winkelschrittgeber weist eine Grundplatte 10 und eine auf diese aufgesetzte Abdeckkappe 12 auf. In der Grundplatte 10 ist mittels Kugellagern 14 drehbar eine Eingangswelle 16 gelagert. Auf der Eingangswelle 16 sitzt drehfest als Winkelmesselement eine Codescheibe 18, die in bekannter Weise

se Winkelwerte in mehreren Codespuren codiert trägt. Die Codescheibe 18 wird in bekannter Weise mittels Lichtquellen 20 und photoelektrischen Empfängern 22 optisch abgetastet.

Die Eingangswelle 16 ist als Hohlwelle mit einer koaxial durchgehenden Innenbohrung ausgebildet. An dem durch die Grundplatte 10 herausgeführten Wellenende 24 der Eingangswelle 16 verengt sich die Innenbohrung konisch gegen das Ende der Eingangswelle 16, wie mit 26 gekennzeichnet ist. Das Wellenende 24 weist von seiner axialen Stirnfläche ausgehende axiale Schlitze 28 auf.

In die Innenbohrung der Eingangswelle 16 ist ein Spreizstift 30 eingesetzt, der durch die gesamte Eingangswelle 16 hindurchführt und mit einer konischen Spitze an dem Innenkonus 26 des Wellenendes 24 anliegt. An dem dem Wellenende 24 entgegengesetzten Ende ist die Innenbohrung der Eingangswelle 16 mit einem Gewinde 32 versehen, in welches eine Schraube 34 eingedreht ist. Wird die Schraube 34 in die Eingangswelle 16 eingedreht, so schiebt sie den Spreizstift 30 axial nach vorne, so dass dessen an dem Innenkonus 26 angreifende Spitze das Wellenende 24 auseinanderspreizt. Wird die Schraube 34 aus der Eingangswelle 16 herausgedreht, so wird der Spreizstift 30 durch die Elastizität des Wellenendes 24 und die Wirkung des Innenkonus 26 axial zurückgedrückt, so dass das Wellenende 24 wieder seine ursprüngliche Form einnimmt, in welcher sein Aussendurchmesser dem Aussendurchmesser der Eingangswelle 16 entspricht.

Die Schraube 34 ist durch eine von einem Verschlussstopfen 36 verschlossene Öffnung in der rückwärtigen Stirnfläche der Abdeckkappe 12 zugänglich.

Zur Montage des Winkelschrittgebers an einer Antriebswelle 38, deren Winkelstellung zu messen ist, wird auf der Antriebswelle 38 ein Verbindungselement 40 befestigt. Das Verbindungselement 40 wird mittels einer Klemmschelle 42 drehfest an der Antriebswelle 38 befestigt. Mit der Klemmschelle 42 ist eine Buchse 44 mit einer Innenbohrung 46 so verbunden, dass ein gegenseitiges Verkippen der Achsen der Klemmschelle 42 und der Buchse 44 in gewissem Masse möglich ist, eine gegenseitige Winkelverdrehung von Klemmschelle 42 und Buchse 44 jedoch nicht möglich ist. Dazu dienen zwei Kreisringscheiben 48, die jeweils an zwei diametralen Punkten mit der Klemmschelle 42 bzw. der Buchse 44 und an zwei hierzu unter 90° angeordneten diametralen Punkten miteinander verbunden sind.

Das Wellenende 24 der Eingangswelle 16 wird in die Innenbohrung 46 des Verbindungselements 40 eingesetzt und durch Auseinanderspreizen mittels des Spreizstiftes 30 in dem Verbindungselement kraftschlüssig drehfest festgelegt. Das Verbindungselement 40 stellt auf diese Weise eine drehfeste Verbindung zwischen der Antriebswelle 38 und der Eingangswelle 16 dar, lässt aber eine gewisse Toleranz in der fluchtenden gegenseitigen Ausrichtung der Achsen der Antriebswelle 38 und der Eingangswelle 16 bei der Montage zu.

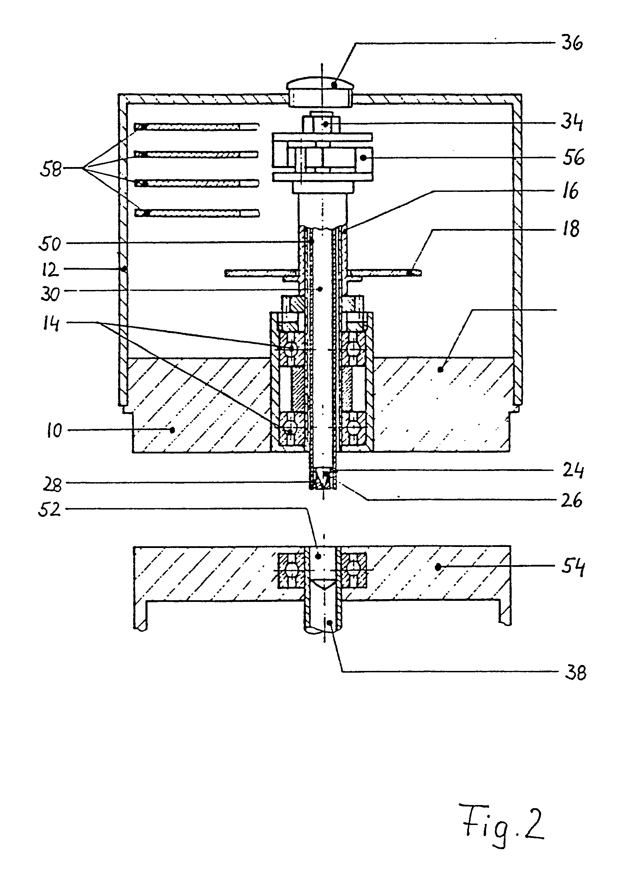

Figur 2 zeigt ein zweites Ausführungsbeispiel eines absoluten Winkelschrittgebers. Soweit dieses zweite Ausführungsbeispiel mit dem Ausführungsbeispiel der Figur 1 übereinstimmt, sind dieselben Bezugszeichen verwendet und auf die vorhergehende Beschreibung wird verwiesen.

In dem Ausführungsbeispiel der Figur 2 ist die Eingangswelle 16 des Winkelschrittgebers als Rohr ausgebildet. Koaxial in der Eingangswelle 16 ist eine Kupplungswelle 50 angeordnet, deren Aussendurchmesser etwas geringer ist als der Innendurchmesser der rohrförmigen Eingangswelle 16. Die Kupplungswelle 50 ist auf diese Weise frei in der Eingangswelle 16 bewegbar, so dass ein gegenseitiges Verkippen der Achsen der Eingangswelle 16 und der Kupplungswelle 50 in gewissem Masse möglich ist.

Die Eingangswelle 16 schliesst bündig mit der der Antriebswelle 38 zugewandten Stirnfläche der Grundplatte 10 ab. Die als Hohlwelle ausgebildete Kupplungswelle 50 ragt dagegen mit einem Wellenende 24 über die Grundplatte 10 hinaus. Das Wellenende 24 weist in der oben beschriebenen Weise einen Innenkonus 26 und axiale Schlitze 28 auf. In die hohle Kupplungswelle 50 ist in der oben beschriebenen Weise ein Spreizstift 30 koaxial eingesetzt, der mittels einer in ein Innengewinde des rückwärtigen Endes der Kupplungswelle 50 eindrehbaren Schraube 34 axial verschiebbar ist.

Das Wellenende 24 der Kupplungswelle 50 wird in eine Sackbohrung 52 der Antriebswelle 38 eingesetzt. Durch Auseinanderspreizen des Wellenendes 24 mittels des Spreizstiftes 30 werden die Kupplungswelle 50 und die Antriebswelle 38 mit Kraftschluss drehfest miteinander verbunden. Die Grundplatte 10 kann dabei unmittelbar anliegend an einer Anbaufläche 54 montiert werden.

An dem dem Wellenende 24 entgegengesetzten Ende sind die Kupplungswelle 50 und die Eingangswelle 16 mittels eines Verbindungselementes 56 miteinander verbunden. Das Verbindungselement 56 lässt ein geringes gegenseitiges Verkippen der Achsen der Eingangswelle 16 und der Kupplungswelle 50 zu, lässt jedoch keine gegenseitige Verdrehung der Eingangswelle 16 und der Kupplungswelle 50 zu. Das Verbindungselement 56 gewährleistet somit eine drehfeste Verbindung zwischen der Eingangswelle 16 und der Kupplungswelle 50 bzw. der Antriebswelle 38 und nimmt geringe Toleranzabweichungen in der Fluchtung der Achsen der Antriebswelle 38 und der Eingangswelle 16 auf.

Das Verbindungselement 56 ist an sich bekannt und zum Beispiel in der US-PS 4 282 723 und der DE-OS 3 038 072 beschrieben.

Da die Grundplatte 10 bei dem zweiten Ausführungsbeispiel der Figur 2 unmittelbar an der Anbaufläche 54 montiert werden kann, ergibt sich eine geringere axiale Gesamtabmessung gegenüber dem Ausführungsbeispiel der Figur 1, bei welchem sich das Verbindungselement 40 zwischen der Grundplatte 10 und der Anbaufläche 54 befindet. Das Verbindungselement 56 verlängert in dem Ausführungsbeispiel der Figur 2 die axialen Bauabmessungen nicht, da das Verbindungselement 56 in dem Raum der Abdeckkappe 12 angeordnet werden kann, der ohnehin für die Aufnahme von Platinen 58 für die Elektronik notwendig ist.

In beiden Ausführungsbeispielen kann der Winkelschrittgeber auch in montiertem Zustand justiert werden. Dazu wird der Spreizstift 30 zurückgeschraubt, so dass er das Wellenende 24 nicht mehr auseinanderspreizt. Die Eingangswelle 16 kann dann ohne Kraftaufwand gegenüber dem Verbindungselement 40 (in Figur 1) bzw. der Antriebswelle 38 (in Figur 2) verdreht werden, bis der Nullpunkt der Codescheibe 18 mit der Winkelstellung Null der Antriebswelle 38 übereinstimmt. In dieser Stellung wird die Eingangswelle 16 festgehalten und der Spreizstift 30 wird wieder eingeschraubt, so dass sich das Wellenende 24 kraftschlüssig in dem Verbindungselement 40 bzw. der Antriebswelle 38 festspannt. Da sich beim Einschrauben des Spreizstiftes 30 nur der Umfang des Wellenendes 24 erweitert, besteht keine Gefahr, dass sich die Eingangswelle 16 gegenüber der Antriebswelle 38 verdreht und die Justage beeinträchtigt wird.

Es ist ohne weiteres ersichtlich, dass das Auseinanderspreizen des Wellenendes 24 auch dadurch erreicht werden kann, dass sich der Innendurchmesser des Wellenendes 24 gegen sein Ende hin konisch erweitert und der Spreizstift 30 ein verdicktes an dieser konischen Erweiterung angreifendes Ende aufweist, wobei der Spreizstift zum Auseinanderspreizen des Wellenendes 24 zurückgezogen wird.

**Patentansprüche**

1. Justiervorrichtung für Winkelschrittgeber mit einer Eingangswelle (16), mit wenigstens einem mit der Eingangswelle (16) in Drehverbindung stehenden Winkelmesselement (18), mit einem elastischen winkelsteifen Verbindungselement (40 bzw. 56), das in den Drehmomentübertragungsweg von einer in ihrer Winkelstellung zu messenden Antriebswelle (38) zu der Eingangswelle (16) eingesetzt ist, und mit einer lösbaren kraftschlüssigen Verbindung, die in den Drehmomentübertragungsweg von der Antriebswelle (38) zu dem Winkelmesselement (18) eingesetzt ist, dadurch gekennzeichnet, dass zur kraftschlüssigen Verbindung zwischen der Antriebswelle (38) und der Eingangswelle (16) das der Antriebswelle (38) zugewandte Wellenende (24) einer durch den Winkelschrittgeber durchgehenden Hohlwelle, die entweder die Eingangswelle (16) selbst oder eine die Eingangswelle frei axial durchsetzende Kupplungswelle (50) ist, in eine Bohrung (46 bzw. 52) der Antriebswelle (38) oder eines mit dieser winkelsteif verbundenen Elementes (40) einsetzbar ist, dass dieses Wellende (24) einen Innenkonus (26) und axiale Schlitze (28) aufweist und mittels eines Spreizstiftes (30), der von dem der Antriebswelle (38) entgegengesetzten Ende durch die Hohlwelle führt und axial in der Hohlwelle verstellbar ist, auseinanderspreizbar ist.

2. Justiervorrichtung nach Anspruch 1, dadurch gekennzeichnet, dass die Hohlwelle die Eingangswelle (16) ist, deren Wellenende (24) in die Bohrung (46) des an der Antriebswelle (38) befestigbaren Verbindungselements (40) einsetzbar ist.

3. Justiervorrichtung nach Anspruch 1, dadurch gekennzeichnet, dass die Eingangswelle (16) als Rohr ausgebildet ist, dass die Hohlwelle eine die Eingangswelle (16) frei koaxial durchsetzende Kupplungswelle (50) ist, deren Wellenende (24) in die Bohrung (52) der Antriebswelle (38) einsetzbar ist und dass das Verbindungselement (56) die der Antriebswelle (38) entgegengesetzten Enden der Eingangswelle (16) und der Kupplungswelle (50) verbindet.

4. Justiervorrichtung nach einem der Ansprüche 1–3, dadurch gekennzeichnet, dass der Spreizstift (30) mittels einer Schraube (34) axial in der Hohlwelle verschiebbar ist.

## Claims

1. An adjusting device for instruments reporting the size of angles with an input shaft (16), with at least one angle measuring component (18) connected in rotation with the input shaft (16), with a resilient but angularly rigid coupling component (40 or 56) which is inserted in the path for transmitting the twisting moment to the input shaft (16) from a drive shaft (38) in the position the angle of which is to be measured, and with a force-fitted releasable connection which is inserted in the path for transmitting the twisting moment to the angle measuring component (18) from the drive shaft (38), characterized in that for force-fitted connection between the drive shaft (38) and the input shaft (16), the shaft end (24) facing towards the drive shaft (38) of a hollow shaft running through the instrument reporting the size of angles, which is either the input shaft (16) itself or a coupling shaft (50) passing axially freely through the input shaft, can be inserted in a bore (46 or 52 respectively) of the drive shaft (38) or an angularly rigid element (40) fastened to this, and in that this shaft end (24) comprises an inner cone (26) and axial slits (28) and can be expanded by means of an expansion rod (30) which is led through the hollow shaft from the end away from the drive shaft (38) and can be adjusted axially in the hollow shaft.

2. An adjusting device according to Claim 1, characterized in that the hollow shaft is the input shaft (16, the shaft end (24) of which can be inserted into the bore (46) of the coupling element (40) fastened to the drive shaft (38).

3. An adjusting device according to Claim 1, characterized in that the input shaft (16) is formed as a tube, in that the hollow shaft is a coupling shaft (50) passing coaxially freely through the input shaft (16), the shaft end (24) of which can be inserted into the bore (52) of the drive shaft (38) and in that the coupling element (56) connects the ends of the input shaft (16) and the coupling shaft (50) furthest away from the drive shaft (38).

4. An adjusting device according to any one of Claims 1 to 3, characterized in that the extending rod (30) can be pushed axially in the hollow shaft by means of a screw (34).

## Revendications

1. Dispositif d'ajustage pour transmetteurs de pas d'angle, comprenant un arbre d'entrée (16), au moins un élément de mesure d'angles (18) en liaison de rotation avec l'arbre d'entrée (16), un élément de raccordement élastique à rigidité angulaire (40 et respectivement 56) qui est intercalé dans le trajet de transmission du couple de rotation entre un arbre moteur (38) dont il faut mesurer la position angulaire et un arbre d'entrée (16), et un couplage par adhérence amovible inséré dans le trajet de transmission du couple de rotation entre l'arbre moteur (38) et l'élément de mesure d'angles (18), caractérisé en ce que, pour le couplage par adhérence entre l'arbre moteur (38) et l'arbre d'entrée (16), le bout d'arbre (24) d'un arbre creux traversant le transmetteur de pas d'angle et constitué par l'arbre d'entrée (16) lui-même ou par un arbre d'accouplement (50) traversant librement l'arbre d'entrée dans le sens axial, peut être engagé dans un alésage (46 et respectivement 52) de l'arbre moteur (38) ou d'un élément (40) couplé à rigidité angulaire avec celui-ci; que ce bout d'arbre (24) présente un cône intérieur (26) et des fentes axiales (28) et peut être écarté au moyen d'une broche d'écartement (30) laquelle s'étend, à partir de l'extrémité opposée à l'arbre moteur (38), à travers l'arbre creux et peut être déplacée axialement dans l'arbre creux.

2. Dispositif d'ajustage selon la revendication 1, caractérisé en ce que l'arbre creux est l'arbre d'entrée (16) dont le bout d'arbre (24) peut être engagé dans l'alésage (46) de l'élément de raccordement (40) lequel peut être fixé sur l'arbre moteur (38).

3. Dispositif d'ajustage selon la revendication 1, caractérisé en ce que l'arbre d'entrée (16) est conformé en tube; que l'arbre creux est un arbre d'accouplement (50) qui traverse librement et coaxialement l'arbre d'entrée (16) et dont le bout d'arbre (24) peut être engagé dans l'alésage (52) de l'arbre moteur (38); et que l'élément de raccordement (56) établit la liaison entre les extrémités de l'arbre d'entrée (16) et de l'arbre d'accouplement (50) opposées à l'arbre moteur (38).

4. Dispositif d'ajustage selon l'une quelconque des revendications 1 à 3, caractérisé en ce que la broche d'écartement (30) peut être déplacée axialement dans l'arbre creux au moyen d'une vis (34).

Fig. 1

36

34

58

56

16

18

50

12

30

14

10

24

28

26

52

54

38

Fig.2